(19) Europäisches Patentamt
European Patent Office
Office européen des brevets

(11) Publication number: 0 329 991 A1

(12) **EUROPEAN PATENT APPLICATION**

(21) Application number: 89101816.0

(22) Date of filing: 02.02.89

(51) Int. Cl.4: C08G 63/62 , C08J 5/18

(30) Priority: 04.02.88 JP 22752/88
04.02.88 JP 22751/88

(43) Date of publication of application:
30.08.89 Bulletin 89/35

(84) Designated Contracting States:
BE CH DE FR GB IT LI NL SE

(71) Applicant: IDEMITSU KOSAN COMPANY LIMITED
No. 1-1, 3-chome, Marunouchi Chiyoda-ku
Tokyo(JP)

(72) Inventor: Shigematsu, Kazuyoshi c/o Idemitsu Kosan Co., Ltd.
1280 Kamiizumi Sodegaura-machi
Kimitsu-gun Chiba-ken(JP)
Inventor: Sakamoto, Shuji c/o Idemitsu Kosan Co., Ltd.
1280 Kamiizumi Sodegaura-machi
Kimitsu-gun Chiba-ken(JP)

(74) Representative: Strehl, Schübel-Hopf, Groening, Schulz
Maximilianstrasse 54 Postfach 22 14 55
D-8000 München 22(DE)

(54) **Aromatic polycarbonate film.**

(57) An aromatic polycarbonate film formed from a polycarbonate comprising the repeating units represented by the following general formula (I):

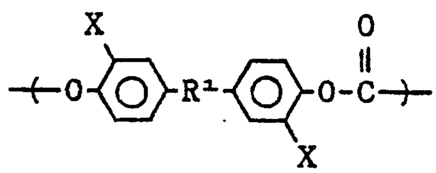

(I)

wherein
$R^1$ is

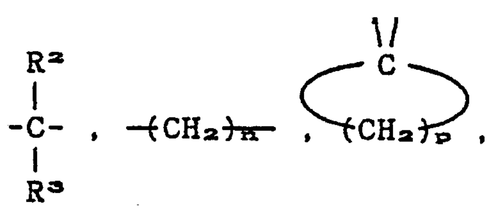

-O- , -S- , $-SO_2-$ or a direct bond, $R^2$ and $R^3$ being independently selected from the group consisting of hydrogen atom, alkyl radicals of 1 to 6 carbon atoms or phenyl radical, n being selected from integers having a value of from 2 to 10, p being selected from integers having a value of from 4 to 10, and each X is independently phenyl radical or cyclohexyl radical
has low moisture permeability, high surface hardness and excels in heat resistance and mechanical properties.

EP 0 329 991 A1

# AROMATIC POLYCARBONATE FILM

## BACKGROUND OF THE INVENTION

### (a) Field of the Invention

The present invention relates to an aromatic polycarbonate film which can be suitably used as parts for various electronic or electric instruments. In particular, the present invention relates to a substantially amorphous aromatic polycarbonate film which has excellent transparency, heat resistance, and mechanical strength and is improved with respect to low moisture permeability and surface hardness.

### (b) Description of the Related Art

Aromatic polycarbonate films are well known film materials which, due to their well-balanced properties such as transparency, heat resistance, mechanical strength, and electrical properties, have been utilized as various engineering plastic materials for parts of electronic or electric instruments. The conventional aromatic polycarbonate films are formed from commercial aromatic polycarbonates consisting essentially of the repeating units represented by the following formula:

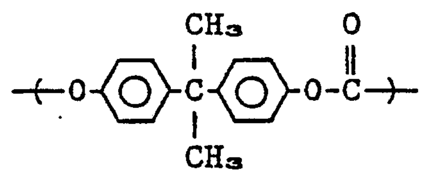

which are generally prepared by the reaction of 2,2-bis(4-hydroxyphenyl)propane (bisphenol A) with a carbonate precursor such as phosgene.

However, as the quality of the required properties of film materials for electronic or electric instrument parts has become higher, the deficiencies of the films formed from the commercial polycarbonate, such as high water vapor transmission rate and low surface hardness, have become evident. Further, the commercial polycarbonates have the tendency of gelation by solvent or the like and crystallization whereby causing problems such as decreased mechanical strength or transparency of films formed therefrom.

## SUMMARY OF THE INVENTION

It is an object of the present invention to solve the problems described above and thereby provide an aromatic polycarbonate film being improved in their low moisture permeability and high surface hardness but having no tendency of gelation by solvents etc. nor crystallization.

In accordance with the present invention, there is provided an aromatic polycarbonate film formed from a polycarbonate comprising the repeating units represented by the following general formula (I):

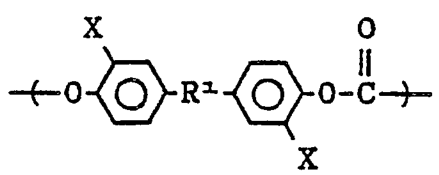

(I)

wherein
$R^1$ is

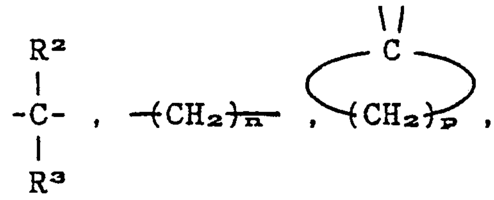

-O-, -S-, $-SO_2-$ or a direct bond, $R^2$ and $R^3$ being independently selected from the group consisting of hydrogen atom, alkyl radicals of 1 to 6 carbon atoms or phenyl radical, n being selected from integers having a value of from 2 to 10, p being selected from integers having a value of from 4 to 10, and

each X is independently phenyl radical or cyclohexyl radical.

In accordance with the present invention, there is further provided an aromatic polycarbonate film formed from a polycarbonate comprising the repeating units represented by the following general formulas (I) and (II):

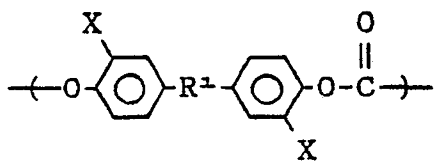 (I)

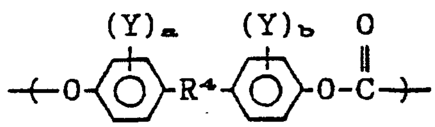 (II)

wherein

$R^1$ and $R^4$ are independently

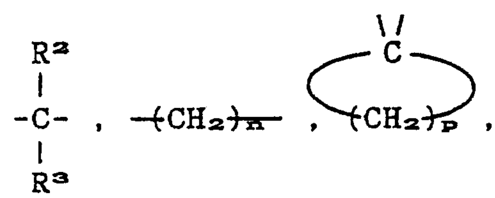

-O-, -S- , $-SO_2-$ or a direct bond, $R^2$ and $R^3$ being independently selected from the group consisting of hydrogen atom, alkyl radicals of 1 to 6 carbon atoms or phenyl radical, n being selected from integers having a value of from 2 to 10, p being selected from integers having a value of from 4 to 10,

each X is independently phenyl radical or cyclohexyl radical,

each Y is independently selected from the group consisting of alkyl radicals of 1 to 6 carbon atoms or halogen radicals, and

a and b are independently selected from integers having a value of from 0 to 4,

and wherein the value of $q/(q+r)$ is 0.05 or above, q being the mole fraction of the repeating units represented by the general formula (I) and r being the mole fraction of the repeating units represented by the general formula (II)..

## DESCRIPTION OF THE PREFERRED EMBODIMENTS

The polycarbonates to be used for forming the latter aromatic polycarbonate film are polymers having a main chain structure comprising the repeating units represented by the general formula (I) and the repeating units represented by the general formula (II) and which polymers having a value of $q/(q+r)$ of 0.05 or above, preferably 0.5 or above.

If the value of q/(q + r) is less than 0.05, decrease in moisture permeability and improvement in surface hardness of films will not be attained. Further, gelation of the polymer material by solvent or the like and crystallization will not be prevented.

In the present invention, films include not only thin films as is generally called but also films thinly coating surfaces of articles.

While the molecular weight of the aromatic polycarbonates to be used in the present invention may be varied depending upon the kind of the objective film, the preferred aromatic polycarbonates are those having a reduced viscosity [$\eta$ sp/c] of 0.3 to 4.0 dl/g as measured in methylene chloride at a concentration of 0.5 g/dl at 20 °C. In case where X in the general formula (I) is phenyl radical, the preferred are those having a reduced viscosity of 0.4 to 3.5 dl/g, and in case where X is cyclohexyl radical, the preferred are those having a reduced viscosity of 0.4 to 3.0 dl/g. If aromatic polycarbonates having a reduced viscosity of less than 0.3 dl/g are used, the strength of the obtained films may be insufficient. If the reduced viscosity excels 4.0 dl/g, forming of film may become substantially difficult.

Some illustrative examples of $R^2$ and $R^3$ in

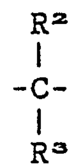

in $R^1$ and $R^4$ of the general formulas (I) and (II) include hydrogen atom, methyl radical, ethyl radical, propyl radical, butyl radical, pentyl radical, hexyl radical, and phenyl radical.

The particularly preferred $R^1$ includes, for example,

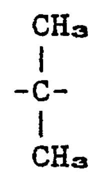 , 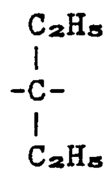 , 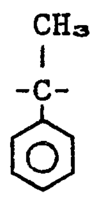 , 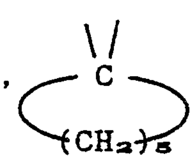 , and $-SO_2-$ .

The particularly preferred $R^4$ is, for example,

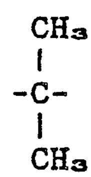 .

Some illustrative examples of Y in the general formula (II) include halogen radicals such as fluorine, bromine, and chlorine, methyl radical, ethyl radical, propyl radical, isopropyl radical, butyl radical, isobutyl radical, heptyl radical, hexyl radical, and isohexyl radical.

Various known methods may be employed for the preparation of the polycarbonates to be used in the present invention. For example, a method of direct reaction of a dihydric phenol compound represented by the following general formula (III)

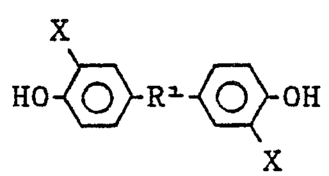

(III)

wherein $R^1$ and X are as defined above,
with phosgene or of a dihydric phenol compound represented by the general formula (III) and a dihydric

phenol compound represented by the following general formula (IV)

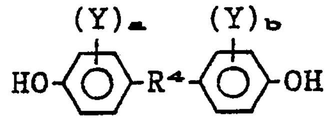

(IV)

wherein Y, $R^4$, a, and b are as defined above, with phosgene or a method of transesterification between the above-described dihydric phenol compounds and bisarylcarbonates may be employed.

In the former direct reaction of dihydric phenol compounds with phosgene, the dihydric phenol compounds are reacted with phosgene generally in the presence of an acid acceptor and a solvent. The acid acceptors which may be used include, for example, pyridine and hydroxides of alkaline metals such as sodium hydroxide and potassium hydroxide. The solvents which may be used include, for example, methylene chloride, chlorobenzene, and xylene. It is desirable to carry out the reaction in the presence of a catalyst for accelerating polycondensation reaction, for example a tertiary amine such as triethylamine or a quaternary ammonium salt, and in the presence of a molecular weight regulator for controlling the polymerization degree, for example p-t-butylphenol or phenyl phenol. A small amount of antioxidants such as sodium sulfite and hydrosulfite also may be added at need. The reaction is generally carried out at temperatures ranging from 0 to 150 °C, preferably from 5 to 40 °C. While the reaction time varies depending upon the reaction temperature, it is generally 0.5 minutes to 10 hours, preferably 1 minute to 2 hours. It is desirable to maintain the pH of the reaction system at 10 or above during the reaction.

In the latter transesterification method, the above-described dihydric phenol compounds are mixed with a bisarylcarbonate and reacted under a reduced pressure at a high temperature. The reaction is generally carried out at temperatures ranging from 150 to 350 °C, preferably 200 to 300 °C. Preferably, the pressure is reduced to 1 mmHg or below toward the final reaction stage to distill the phenols generated from the bisarylcarbonate by the transesterification out of the reaction system. While the reaction time varies depending upon the reaction temperature, degree of pressure reduction, etc., it is generally about 1 to 4 hours. It is desirable to carry out the reaction in the atmosphere of an inert gas such as nitrogen or argon, and may be carried out, at need, in the presence of the above-described molecular weight regulators, antioxidants, and the like.

Some illustrative examples of the compounds represented by the general formula (III) wherein X is phenyl radical include

2,2-bis(3-phenyl-4-hydroxyphenyl)propane,
1-phenyl-1,1-bis(3-phenyl-4-hydroxyphenyl)ethane,
1,1-bis(3-phenyl-4-hydroxyphenyl)cyclopentane,
3,3-bis(3-phenyl-4-hydroxyphenyl)pentane,
bis(3-phenyl-4-hydroxyphenyl)sulfone,
3,3′-diphenyl-4,4′-dihydroxybiphenyl,
bis(3-phenyl-4-hydroxyphenyl)methane,
1-phenyl-1,1-bis(3-phenyl-4-hydroxyphenyl)methane,
1,1-bis(3-phenyl-4-hydroxyphenyl)ethane,
1,2-bis(3-phenyl-4-hydroxyphenyl)ethane,
1,3-bis(3-phenyl-4-hydroxyphenyl)propane,
2,2-bis(3-phenyl-4-hydroxyphenyl)butane,
1,4-bis(3-phenyl-4-hydroxyphenyl)butane,
1,1-bis(3-phenyl-4-hydroxyphenyl)-1-phenylbutane,
2,2-bis(3-phenyl-4-hydroxyphenyl)octane,
1,8-bis(3-phenyl-4-hydroxyphenyl)octane,
bis(3-phenyl-4-hydroxyphenyl)ether,
bis(3-phenyl-4-hydroxyphenyl)sulfide, and
1,1-bis(3-phenyl-4-hydroxyphenyl)cyclohexane.

Among these compounds, particularly preferred are 2,2-bis(3-phenyl-4-hydroxyphenyl)propane, 1-phenyl-1,1- bis(3-phenyl-4-hydroxyphenyl)ethane, 1,1-bis(3-phenyl-4-hydroxyphenyl)cyclohexane, and bis(3-phenyl-4-hydroxyphenyl)sulfone.

Some illustrative examples of the compounds represented by the general formula (III) wherein X is a cyclohexyl radical include

2,2-bis(3-cyclohexyl-4-hydroxyphenyl)propane,

1-phenyl-1,1-bis(3-cyclohexyl-4-hydroxyphenyl)ethane,
1,1-bis(3-cyclohexyl-4-hydroxyphenyl)cyclohexane,
3,3-bis(3-cyclohexyl-4-hydroxyphenyl)pentane,
bis(3-cyclohexyl-4-hydroxyphenyl)sulfone,
3,3′-dicyclohexyl-4,4′-dihydroxybiphenyl,
bis(3-cyclohexyl-4-hydroxyphenyl)methane,
1-phenyl-1,1-bis(3-cyclohexyl-4-hydroxyphenyl)methane,
1,1-bis(3-cyclohexyl-4-hydroxyphenyl)ethane,
1,2-bis(3-cyclohexyl-4-hydroxyphenyl)ethane,
1,3-bis(3-cyclohexyl-4-hydroxyphenyl)propane,
2,2-bis(3-cyclohexyl-4-hydroxyphenyl)butane,
1,4-bis(3-cyclohexyl-4-hydroxyphenyl)butane,
1,1-bis(3-cyclohexyl-4-hydroxyphenyl)-1-phenylbutane,
2,2-bis(3-cyclohexyl-4-hydroxyphenyl)octane,
1,8-bis(3-cyclohexyl-4-hydroxyphenyl)octane,
bis(3-cyclohexyl-4-hydroxyphenyl)ether,
bis(3-cyclohexyl-4-hydroxyphenyl)sulfide,
bis(3-cyclohexyl-4-hydroxyphenyl)sulfoxide,
1,1-bis(3-cyclohexyl-4-hydroxyphenyl)cyclohexane,
bis(3-cyclohexyl-4-hydroxyphenyl)diphenylmethane, and
1,1-bis(3-cyclohexyl-4-hydroxyphenyl)cycloheptane.

Among these compounds, particularly preferred are 2,2-bis(3-cyclohexyl-4-hydroxyphenyl)propane, 1-phenyl-1,1-bis(3-cyclohexyl-4-hydroxyphenyl)ethane, 1,1-bis(3-cyclohexyl-4-hydroxyphenyl)cyclohexane, 3,3-bis(3-cyclohexyl-4-hydroxyphenyl)pentane, and bis(3-cyclohexyl-4-hydroxyphenyl)sulfone.

Some illustrative examples of the dihydric phenol compounds represented by the general formula (IV) include

bis(4-hydroxyphenyl)methane,
1,1-bis(4-hydroxyphenyl)ethane,
1,2-bis(4-hydroxyphenyl)ethane,
2,2-bis(4-hydroxyphenyl)propane,
2,2-bis(3-methyl-4-hydroxyphenyl)propane,
2,2-bis(4-hydroxyphenyl)butane,
2,2-bis(4-hydroxyphenyl)octane,
4,4-bis(4-hydroxyphenyl)heptane,
1,1-bis(4-hydroxyphenyl)-1,1-diphenylmethane,
1,1-bis(4-hydroxyphenyl)-1-phenylethane,
1,1-bis(4-hydroxyphenyl)-1-phenylmethane,
bis(4-hydroxyphenyl)ether,
bis(4-hydroxyphenyl)sulfide,
bis(4-hydroxyphenyl)sulfone,
1,1-bis(4-hydroxyphenyl)cyclopentane,
1,1-bis(4-hydroxyphenyl)cyclohexane,
2,2-bis(3-methyl-4-hydroxyphenyl)propane,
2,2-bis(3,5-dimethyl-4-hydroxyphenyl)propane,
2-(3-methyl-4-hydroxyphenyl)-2-(4-hydroxyphenyl)propane,
1,1-bis(3-methyl-4-hydroxyphenyl)-1-phenylethane,
bis(3-methyl-4-hydroxyphenyl)sulfide,
bis(3-methyl-4-hydroxyphenyl)sulfone,
bis(3-methyl-4-hydroxyphenyl)methane,
1,1-bis(3-methyl-4-hydroxyphenyl)cyclohexane,
4,4′-dihydroxybiphenyl,
2,2-bis(2-methyl-4-hydroxyphenyl)propane,
1,1-bis(2-butyl-4-hydroxy-5-methylphenyl)butane,
1,1-bis(2-t-butyl-4-hydroxy-5-methylphenyl)ethane,
1,1-bis(2-t-butyl-4-hydroxy-5-methylphenyl)propane,
1,1-bis(2-t-butyl-4-hydroxy-5-methylphenyl)butane,
1,1-bis(2-t-butyl-4-hydroxy-5-methylphenyl)isobutane,
1,1-bis(2-t-butyl-4-hydroxy-5-methylphenyl)heptane,

1,1-bis(2-t-butyl-4-hydroxy-5-methylphenyl)-1-phenylmethane,
1,1-bis(2-t-amyl-4-hydroxy-5-methylphenyl)butane,
bis(3-chloro-4-hydroxyphenyl)methane,
bis(3,5-dibromo-4-hydroxyphenyl)methane,
2,2-bis(3-chloro-4-hydroxyphenyl)propane,
2,2-bis(3-fluoro-4-hydroxyphenyl)propane,
2,2-bis(3-bromo-4-hydroxyphenyl)propane,
2,2-bis(3,5-dichloro-4-hydroxyphenyl)propane,
2,2-bis(3,5-difluoro-4-hydroxyphenyl)propane,
2,2-bis(3,5-dibromo-4-hydroxyphenyl)propane,
2,2-bis(3-bromo-4-hydroxy-5-chlorophenyl)propane,
2,2-bis(3,5-dichloro-4-hydroxyphenyl)butane,
2,2-bis(3,5-dibromo-4-hydroxyphenyl)butane,
1,1-bis(3-fluoro-4-hydroxyphenyl)-1-phenylethane,
bis(3-fluoro-4-hydroxyphenyl)ether, and
3,3′-difluoro-4,4′-dihydroxybiphenyl.

Among these, 2,2-bis(4-hydroxyphenyl)propane is particularly preferable.

The aromatic polycarbonates to be used in the present invention include modified polycarbonates which are prepared using additional other dihydric phenol compounds within the range where the properties of the product films will not be deteriorated. Such other dihydric phenol compounds include, for example, resorcinol and hydroquinone. Further, the aromatic polycarbonates to be used in the present invention include branched aromatic polycarbonates which are prepared using a small amount of additional polyhydroxy compounds, for example, in an amount of about 0.05 to 2.0 mol % of the used dihydric phenol compounds.

In preparation of the films of the present invention, one or more of the aromatic polycarbonates described above, at need, may be blended with other thermoplastic resins such as polyalkyleneterephthalates, polyolefins, other polycarbonates, polyethersulfone, polyarylates, polysulfones, and polyphenylenesulfides.

Further, these aromatic polycarbonates, at need, may be blended with known additives such as flame retardant, antioxidant, antistatic agent, filler, impact resistance improving agent, UV absorber, plasticizer, hydrolysis stabilizer, pigment, dyestuff, and coloring stabilizer.

Any known film forming technique may be employed for forming the films of the present invention. For example, press forming techniques such as thermo-press forming; extrusion techniques such as cast-roll technique, inflation technique, and tubular technique; a method of spreading a polymer solution over a belt and removing the solvent by evaporation to form a thin film; and coating method of coating a polymer solution on an article followed by removing the solvent.

The solvents which may be used for the preparation of polymer solutions include, for example, halogen type solvents such as chloroform and methylene chloride, aromatic solvents such as toluene, and ether solvents such as tetrahydrofuran.

The films formed thus may be, at need, oriented by conventional orientation techniques such as tenter technique, tubular technique, and multistage orientation technique. Further, the films may be, at need, subjected to heat treatment.

White the thickness of the films of the present invention is not particularly limited, it is generally 0.1 to 1000 $\mu$ m, preferably 1 to 500 $\mu$ m.

The films of the present invention not only excel in heat resistance, mechanical strength, insulating property, etc. as much as conventional aromatic polycarbonate films, but also are extremely improved in low moisture permeability and high surface hardness. The films of the present invention therefore can be suitably used as high temperature film, low-moisture transmission film, or insulating film for various electronic or electric instrument parts, coating, or the like. Further, since the fact that the polymer material of the present invention is substantially amorphous dissolves the problems of gelation and crystallization of the conventional polymer materials caused by solvent, etc. and thereby precludes the possibility of decrease in mechanical strength or transparency of films, film forming by means of film forming methods using polymer solutions has become possible.

In order to more fully and clearly illustrate the present invention, the following examples are presented. It is intended that the examples be considered as illustrative rather than limiting the invention disclosed and claimed herein.

EXAMPLES 1 to 11 and COMPARATIVE EXAMPLE 1

EXAMPLE 1

Preparation of Polycarbonate

60 g of 2,2-bis(3-phenyl-4-hydroxyphenyl)propane and 0.5 g of p-t-butylphenol as molecular weight regulator were dissolved in 500 ml of methylene chloride, and to the obtained solution were added 300 ml of water and 1 ml of triethylamine as catalyst. Phosgene gas was blown in the mixture with stirring in a rate of 300 to 400 ml/min. During blowing the phosgene gas, a 12 N aqueous sodium hydroxide solution was added dropwise to maintain the pH of the reaction system above 10. After blowing phosgene gas for 25 minutes, reaction was continued for 1 hour. The resulting reaction product was diluted with 700 ml of methylene chloride, washed with successive, water, a 0.01 N hydrochloric acid, and water, and poured into 5 l of methanol to recover the resulting polymer. The yield of the polymer was 96 % and the polymer comprised the repeating units represented by the following formula was obtained.

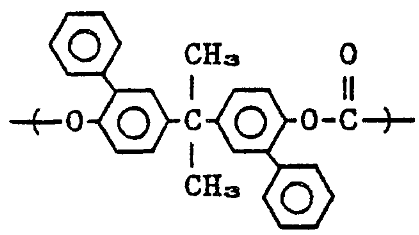

A 10 wt.% solution of the polymer in tetrahydrofuran was prepared and allowed to stand for 1 month at room temperature, and then the viscosity of the solution was measured. After the 1 month standing, the solution did not become cloudy nor set to gel, and the viscosity did not change at all.

Formation of Film

1 part by weight of the obtained polymer was dissolved in 50 parts by weight of chloroform to obtain a polymer solution. The polymer solution was cast over a glass plate with a doctor knife and dried for 24 hours at 120 °C under a reduced pressure to obtain a film of 20 μ m in thickness.

Subsequently, tests of tensile properties of the obtained film was conducted with an auto-graph. Water vapor transmission rate was measured according to JIS-Z-0208, Dish Method B (40 °C , humidity: 90 %), and test of pencil hardness was conducted according to JIS-K-5400 to measure the surface hardness.

The test results are shown in Table 1.

EXAMPLE 2

The procedure of Example 1 was repeated with the exception that 1-phenyl-1,1-bis(3-phenyl-4-hydroxyphenyl)ethane was used in place of 2,2-bis(3-phenyl-4-hydroxyphenyl)propane, and the polymer comprising the repeating units represented by the following formula was obtained.

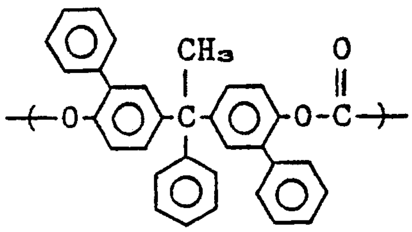

The procedure of film forming in Example 1 was repeated using the polymer to obtain a film.
The test results are shown in Table 1.

EXAMPLE 3

The procedure of Example 1 was repeated with the exception that 1,1-bis(3-phenyl-4-hydroxyphenyl)-cyclohexane was used in place of 2,2-bis(3-phenyl-4-hydroxyphenyl)propane, and the polymer comprising the repeating units represented by the following formula was obtained.

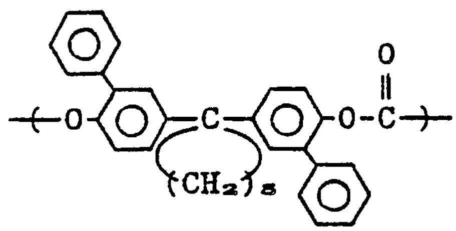

The procedure of film forming in Example 1 was repeated using the polymer to obtain a film.
The test results are shown in Table 1.

EXAMPLE 4

The procedure of Example 1 was repeated with the exception that bis(3-phenyl-4-hydroxyphenyl)sulfone was used in place of 2,2-bis(3-phenyl-4-hydroxyphenyl)propane, and the polymer comprising the repeating units represented by the following formula was obtained.

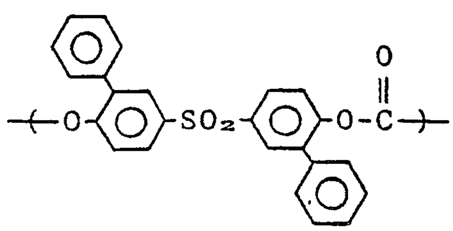

The procedure of film forming in Example 1 was repeated using the polymer to obtain a film.
The test results are shown in Table 1.

EXAMPLE 5

The procedure of Example 1 was repeated with the exception that 38.0 g of 2,2-bis(3-phenyl-4-hydroxyphenyl)propane and 20 g of 2,2-bis(4-hydroxyphenyl)propane were used in place of 2,2-bis(3-phenyl-4-hydroxyphenyl)propane, and the polymer comprising the repeating units represented by the following formula was obtained.

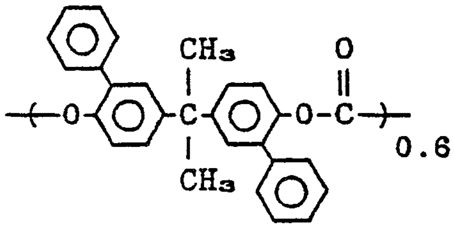

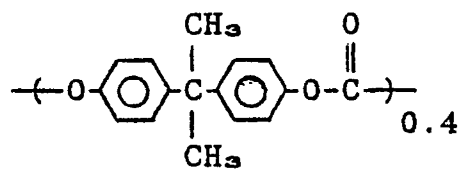

The procedure of film forming in Example 1 was repeated using the polymer to obtain a film.

The test results are shown in Table 1.

## COMPARATIVE EXAMPLE 1

A 10 wt.% solution of a commercial polycarbonate [IDEMITSU POLYCARBONATE A 2500 produced by Idemitsu Petrochemical Co., Ltd.] in tetrahydrofuran was prepared. After the solution was allowed to stand for 1 month at room temperature, it became cloudy and set to gel.

The procedure of film forming in Example 1 was repeated using the commercial polycarbonate to obtain a film.

The test results are shown in Table 1.

Table 1

| | Reduced viscosity (dl/g) | Tensile strength ($kg/cm^2$) | Tensile modulus ($kg/cm^2$) | T g (°C) | Surface hardness (Pencil hardness) | Water vapor transmission rate ( g • mm/ $m^2$ • 24h) |
|---|---|---|---|---|---|---|
| Example 1 | 0.59 | 920 | 24,200 | 145 | H | 2.22 |
| Example 2 | 0.62 | 940 | 26,500 | 174 | H | 2.11 |
| Example 3 | 0.47 | 850 | 25,900 | 161 | H | 1.98 |
| Example 4 | 0.44 | 710 | 33,100 | 172 | F | 2.45 |
| Example 5 | 0.65 | 810 | 23,800 | 146 | F | 3.07 |
| Comparative Example 1 | 0.51 | 680 | 22,200 | 148 | B | 4.44 |

EXAMPLE 6

Synthesis of Polycarbonate

Into a reaction vessel equipped with baffles were introduced 100 g of 2,2-bis(3-cyclohexyl-4-hydroxyphenyl)propane as monomer, 550 ml of a 8 % aqueous NaOH solution, 400 ml of methylene chloride, 1 g of p-t-butylphenol as molecular weight regulator, and 3 ml of a 10 % aqueous triethylamine solution as a catalyst, and the mixture was vigorously stirred during blowing phosgene gas for 10 minutes into the reaction vessel to carry out condensation reaction. The resulting reaction mixture was diluted with 1 l of methylene chloride and then washed with successive, 1 l of water, 500 ml of a 0.01 N aqueous NaOH solution, 500 ml of water, 500 ml of a 0.01 N aqueous NaOH solution, and 500 ml of water. The resulting polymer solution in methylene chloride was poured into 3 l of methanol to purify it by reprecipitation, and thus a white, powdery polymer comprising the repeating units represented by the following formula was obtained.

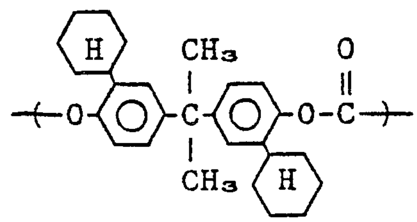

A 10 wt.% solution of the polymer in tetrahydrofuran was prepared and allowed to stand for 1 month at room temperature, and then the viscosity of the solution was measured. After the 1 month standing, the solution did not become cloudy nor set to gel, and the viscosity did not change at all.

The procedure of film forming in Example 1 was repeated using the polymer to obtain a film.

The test results are shown in Table 2.

EXAMPLE 7

The procedure of synthesis of polycarbonate in Example 6 was repeated with the exception that 116 g (0.255 mol) of 1-phenyl-1,1-bis(3-cyclohexyl-4-hydroxyphenyl)ethane was used as monomer in place of 2,2-bis(3-cyclohexyl-4-hydroxyphenyl)propane, and the polymer comprising the repeating units represented by the following formula was obtained.

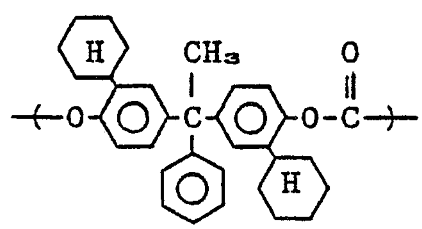

The procedure of film forming in Example 1 was repeated using the polymer to obtain a film.

The test results are shown in Table 2.

EXAMPLE 8

The procedure of synthesis of polycarbonate in Example 6 was repeated with the exception that 110 g (0.255 mol) of 1,1-bis(3-cyclohexyl-4-hydroxyphenyl)cyclohexane was used as monomer, and the polymer comprising the repeating units represented by the following formula was obtained.

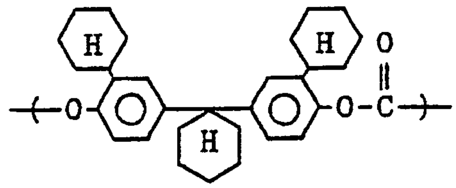

The procedure of film forming in Example 1 was repeated using the polymer to obtain a film.
The test results are shown in Table 2.

EXAMPLE 9

The procedure of synthesis of polycarbonate in Example 6 was repeated with the exception that 107 g (0.255 mol) of 3,3-bis(3-cyclohexyl-4-hydroxyphenyl)pentane was used as monomer, and the polymer comprising the repeating units represented by the following formula was obtained.

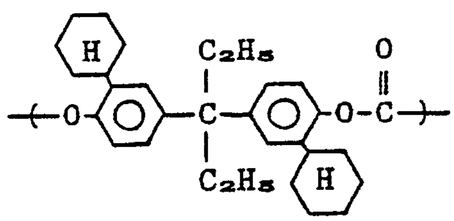

The procedure of film forming in Example 1 was repeated using the polymer to obtain a film.
The test results are shown in Table 2.

EXAMPLE 10

The procedure of synthesis of polycarbonate in Example 6 was repeated with the exception that 106 g (0.255 mol) of bis(3-cyclohexyl-4-hydroxyphenyl)sulfone was used as monomer, and the polymer comprising the repeating units represented by the following formula was obtained.

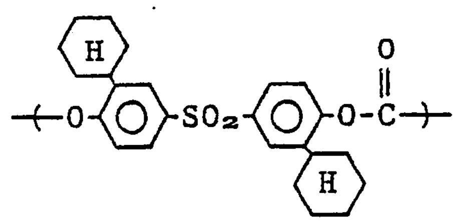

The procedure of film forming in Example 1 was repeated using the polymer to obtain a film.
The test results are shown in Table 2.

EXAMPLE 11

The procedure of synthesis of polycarbonate in Example 6 was repeated with the exception that 79 g (0.20 mol) of 2,2-bis(3-cyclohexyl-4-hydroxyphenyl)propane and 12 g (0.053 mol) of 2,2-bis(4-hydroxyphenyl)propane were used as monomer, and the polymer comprising the repeating units represented by the following formula was obtained.

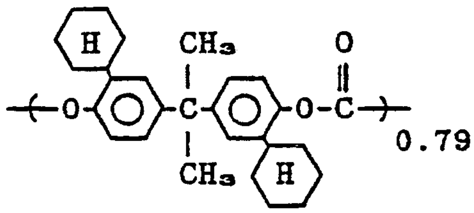

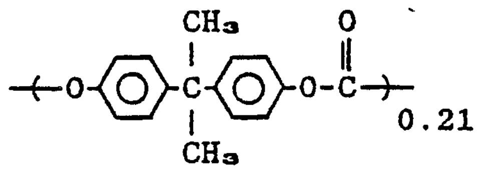

The procedure of film forming in Example 1 was repeated using the polymer to obtain a film. The test results are shown in Table 2.

Table 2

| | Reduced viscosity ($dl/g$) | Tensile strength ($kg/cm^2$) | Tensile modulus ($kg/cm^2$) | T g (°C) | Surface hardness (Pencil hardness) | Water vapor transmission rate ( g • mm/ $m^2$ • 24h) |
|---|---|---|---|---|---|---|
| Example 6 | 0.58 | 840 | 24,200 | 128 | H | 1.77 |
| Example 7 | 0.43 | 710 | 26,500 | 156 | H | 2.48 |
| Example 8 | 0.61 | 850 | 25,900 | 144 | H | 0.63 |
| Example 9 | 0.70 | 810 | 22,900 | 127 | H | 1.01 |
| Example 10 | 0.48 | 750 | 32,100 | 148 | F | 3.18 |
| Example 11 | 0.52 | 740 | 23,800 | 132 | F | 2.33 |

## Claims

1. An aromatic polycarbonate film comprising a polycarbonate comprising repeating units represented by the following general formula (I):

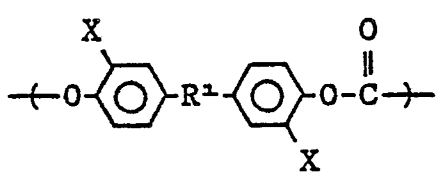

(I)

wherein
$R^1$ is

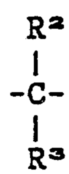 , $-(CH_2)_n-$ , 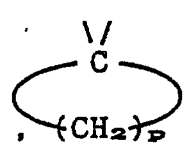 ,

-O- , -S- , $-SO_2-$ or a direct bond, $R^2$ and $R^3$ being independently selected from the group consisting of hydrogen atom, alkyl radicals of 1 to 6 carbon atoms or phenyl radical, n being selected from integers having a value of from 2 to 10, p being selected from integers having a value of from 4 to 10, and

each X is independently phenyl radical or cyclohexyl radical.

2. The aromatic polycarbonate film of claim 1 wherein $R^1$ is

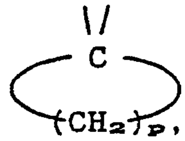

p being selected from integers having a value of from 4 to 10.

3. The aromatic polycarbonate film of claim 2 wherein $R^1$ is cyclohexylene radical.

4. The aromatic polycarbonate film of claim 1 wherein $R^1$ is $-SO_2-$ .

5. An aromatic polycarbonate film comprising a polycarbonate having the repeating units represented by the following general formulas (I) and (II):

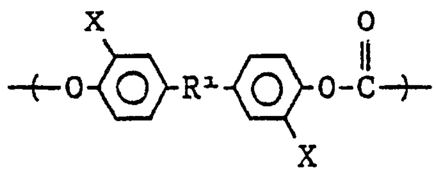

(I)

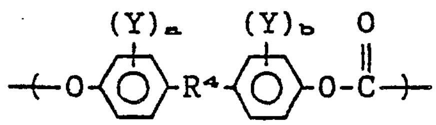

(II)

wherein

$R^1$ and $R^4$ are independently

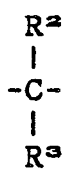 , 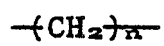 , 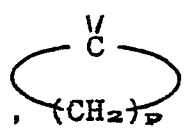 ,

-O- , -S- , $-SO_2-$ or a direct bond, $R^2$ and $R^3$ being independently selected from the group consisting of hydrogen atom, alkyl radicals of 1 to 6 carbon atoms or phenyl radical, n being selected from integers having a value of from 2 to 10, p being selected from integers having a value of from 4 to 10,

each X is independently phenyl radical or cyclohexyl radical,

each Y is independently selected from the group consisting of alkyl radicals of 1 to 6 carbon atoms or halogen radicals, and

a and b are independently selected from integers having a value of from 0 to 4,

and wherein the value of $q/(q+r)$ is 0.05 or above, q being the mole fraction of the repeating units represented by the general formula (I) and r being the mole fraction of the repeating units represented by the general formula (II).

6. The aromatic polycarbonate film of claim 5 wherein $R^1$ is

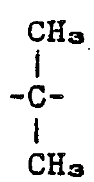 .

European Patent Office

# EUROPEAN SEARCH REPORT

Application Number

EP 89 10 1816

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 088 947 (MOBAY CHEMICAL CORPORATION) * claims 1,8,10; page 3, line 18 - page 6, line 16 * | 1-6 | C 08 G 63/62<br>C 08 J 5/18 |
| Y | EP-A-0 249 963 (IDEMITSU KOSAN COMPANY) LIMITED) * whole document * | 1-6 | |
| Y | PATENT ABSTRACTS OF JAPAN vol. 11, no. 106 (C-414)(2553), 3rd April 1987; & JP - A -61 255929 (IDEMITSU KOSAN CO LTD) 13-11-1986 * whole abstract * | 1-3,5-6 | |
| A | DE-A-2 122 574 (FARBENFABRIKEN BAYER AG) * claims 1-5 * | 1 | |
| A | EP-A-0 112 530 (GENERAL ELECTRIC COMPANY) * claims 1,13,15; page 4, line 23 * | 1 | **TECHNICAL FIELDS SEARCHED (Int. Cl.4)**<br>C 08 G<br>C 08 J |

The present search report has been drawn up for all claims

| Place of search | Date of completion of the search | Examiner |
|---|---|---|
| BERLIN | 18-05-1989 | VOIGTLAENDER R O J |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document